# EUROPÄISCHE PATENTSCHRIFT

(11) **EP 4 530 273 B1**
(45) Veröffentlichungstag und Bekanntmachung des Hinweises auf die Patenterteilung: **09.12.2026**
(21) Anmeldenummer: 24192446.3
(22) Anmeldetag: 01.08.2024
(51) Int. Cl.: C04B 18/02, C04B 20/00, C04B 20/02, C04B 20/10, C04B 28/02, C04B 28/14, C04B 38/00, C04B 111/28

(54) **BINDEMITTELMISCHUNG FÜR EINE GEBUNDENE DÄMMSTOFFSCHÜTTUNG, GEBUNDENE DÄMMSTOFFSCHÜTTUNG MIT DER BINDEMITTELMISCHUNG UND DEREN VERWENDUNG SOWIE VERFAHREN ZUR HERSTELLUNG EINER VERFESTIGTEN DÄMMSTOFFSCHÜTTUNG**
BINDER MIXTURE FOR A BONDED INSULATING BULK, BONDED INSULATING BULK WITH THE BINDING MIXTURE AND ITS USE AS WELL AS PROCESS TO MANUFACTURE A SOLIDIFIED BONDED INSULATION BULK
MÉLANGE DE LIANT POUR UN MATÉRIAU ISOLANT LIÉ, MATÉRIAU ISOLANT LIÉ COMPRENANT LE MÉLANGE DE LIANT ET SON UTILISATION, PROCÉDÉ DE FABRICATION D'UN MATÉRIAU ISOLANT LIÉ

(30) Priorität: 09.08.2023 DE 102023207658
(43) Veröffentlichungstag der Anmeldung: 02.04.2025
(60) Teilanmeldung: 25207526.2 / 4 653 403
(73) Patentinhaber: Xella Baustoffe GmbH, 47259 Duisburg (DE)
(72) Erfinder: Anders, Nicole, 47259 Duisburg (DE); Kochan, Jörg, 47259 Duisburg (DE)
(74) Vertreter: Dr. Solf & Zapf Patent- und Rechtsanwalts PartG mbB

(56) Entgegenhaltungen:
- EP-A1- 2 336 096
- EP-A1- 3 162 777
- EP-A2- 2 695 866
- WO-A1-2012/087776
- WO-A1-2016/097181
- WO-A1-2016/102116
- WO-A1-2020/093560
- DE-A1- 2 121 390
- DE-A1- 4 103 833
- DE-A1- 4 443 594

## Beschreibung

Die vorliegende Erfindung betrifft eine trockene Bindemittelmischung für eine gebundene, schüttfähige, trockene Dämmstoffschüttung, eine gebundene, schüttfähige, trockene Dämmstoffschüttung mit der Bindemittelmischung und deren Verwendung sowie ein Verfahren zur Herstellung einer verfestigten Dämmstoffschüttung und eine mit dem Verfahren hergestellte verfestigte Dämmstoffschüttung.

Bei Schüttungen handelt es sich um Materialgemische mit einem hohen Anteil an Granulatkörnern. Dämmschüttungen oder Dämmstoffschüttungen weisen mindestens ein Dämmstoffgranulat auf und werden sowohl als Wärmedämmung als auch als Schalldämmung eingesetzt. Außerdem gleichen Schüttungen im eingebrachten Zustand Unebenheiten aus und werden oftmals auch aus diesem Grund verwendet (Ausgleichsschüttungen). Bei dem Dämmstoffgranulat handelt es sich beispielsweise um Blähton-, Blähglas-, Blähschiefer-, Porenbeton- oder Perlitgranulat.

Bei Schüttungen unterscheidet man zudem zwischen losen und gebundenen Schüttungen.

Lose Schüttungen werden auf den jeweiligen Untergrund aufgebracht und lediglich gegebenenfalls etwas verdichtet. Die einzelnen Granulatkörner des Granulats sind nicht miteinander verbunden.

Eine gebundene Schüttung weist zumindest ein, z.B. mineralisches, hydraulisches, Bindemittel auf. Das hydraulische Bindemittel weist vorzugsweise Portlandzement auf. Die Schüttung wird dann mit Wasser zu einer Schüttungsfrischmasse angemischt, auf den jeweiligen Untergrund aufgebracht, gegebenenfalls verdichtet und/oder abgezogen, und anschließend das Bindemittel aushärten gelassen. Dadurch werden die einzelnen Granulatkörner des Granulats miteinander verbunden und die Schüttung wird verfestigt. Da der Anteil an Bindemittel allerdings sehr gering ist, sind die Granulatkörner - im Gegensatz beispielsweise zu einem Leichtbetonformkörper - nicht in eine durchgehende Bindemittelmatrix eingebettet, sondern lediglich punktuell miteinander verbunden.

Porenbetongranulat besteht aus Porenbetonmaterial (früher Gasbetonmaterial). Porenbetonmaterial wiederum besteht aus hydrothermal gehärtetem, porosiertem Calciumsilikathydratmaterial. Es wird hergestellt aus einer wässrigen Mischung bzw. Frischbetonmasse, welche mindestens eine im Hydrothermalprozess reaktionsfähige CaO-Komponente und mindestens eine im Hydrothermalprozess reaktionsfähige SiO₂-Komponente, ein Treibmittel, insbesondere Aluminiumpulver und/oder -paste, sowie gegebenenfalls, insbesondere inerte, Zusatzstoffe enthält. Außerdem enthält die Frischbetonmasse häufig mindestens ein Zusatzmittel, z.B. ein Fließmittel und/oder ein Dispergiermittel. Die gießfähige bzw. gießfertige Frischbetonmasse wird in eine Gießform gegossen, auftreiben und ansteifen gelassen, geschnitten und anschließend einer Dampfhärtung unterzogen. Im Gegensatz zu herkömmlichem, nicht autoklaviertem Beton weist Porenbetonmaterial keine groben Zuschlagkörner mit einer Korngröße > 2,0 mm auf.

Für die Herstellung von hydrothermal gehärtetem Schaumbetonmaterial wird der Frischbetonmasse anstelle des Treibmittels vorgefertigter Schaum untergemischt oder die einen Schaumbildner enthaltende Frischbetonmasse wird durch Rühren direkt aufgeschäumt und anschließend die gießfähige bzw. gießfertige Frischbetonmasse in die Gießform gegossen. Der Treibprozess entfällt jeweils.

Herkömmliches Poren- und Schaumbetonformmaterial besteht somit im Wesentlichen aus einem Feststoffsteggerüst, welches in der Regel hauptsächlich aus Calciumsilikathydratphasen (CSH-Phasen) besteht. Hauptsächlich meint, dass das Feststoffsteggerüst bezogen auf seine Trockenmasse zu über 50 M.-% aus den CSH-Phasen besteht. Das Feststoffsteggerüst kann zudem z.B. Restquarzkörner sowie gegebenenfalls die inerten Zusatzstoffe enthalten. Die Restquarzkörner und die inerten Zusatzstoffe sind in die CSH-Phasen eingebettet. Das Feststoffsteggerüst weist Stege auf, die die durch die Porosierung oder die Schaumzugabe oder das Aufschäumen künstlich erzeugten Poren (= Makroporen) umgeben. Außerdem weist das Feststoffsteggerüst Mikro-, Gel- und Nanoporen auf, die in die CSH-Phasen eingebettet sind bzw. in diesen verteilt sind. Die Nano-, Gel- und Mikroporen sind Bestandteil des Feststoffsteggerüsts. Die CSH-Phasen des Feststoffsteggerüsts fungieren somit als Bindephase im Feststoffsteggerüst. Sie sind größtenteils kryptokristallin bis kristallin, in der Regel handelt es sich hauptsächlich um 11 Å-Tobermorit sowie um CSH(I).

Gebundene Schüttungen können zusätzlich zu dem Dämmstoffgranulat und dem Bindemittel zudem mindestens einen weiteren Zuschlagstoff und/oder mindestens einen Zusatzstoff und/oder mindestens ein Zusatzmittel aufweisen.

Zusatzstoffe sind fein verteilte Stoffe, die bestimmte Eigenschaften der Schüttung beeinflussen. Sie beeinflussen vorrangig die Verarbeitbarkeit der Schüttungsfrischmasse. Bei den Zusatzstoffen wird unterschieden zwischen inaktiven (inerten) Zusatzstoffen und aktiven Zusatzstoffen, insbesondere puzzolanischen Zusatzstoffen und latent hydraulischen Zusatzstoffen. Inerte Zusatzstoffe reagieren nicht oder höchstens oberflächlich mit dem Bindemittel. Im Rahmen der Erfindung werden die aktiven Zusatzstoffe dem Bindemittelanteil zugerechnet, sofern sie zur Ausbildung der Bindemittelmatrix beitragen. Zudem wird auch der Erstarrungsregler dem Bindemittelanteil zugerechnet.

Zusatzstoffe gehören zum Mehlkornanteil der Schüttung. Als Mehlkorn bzw. Mehl werden im Rahmen der Erfindung alle Körnungen bezeichnet, deren Korngröße ≤ 0,125 mm beträgt. Ein Granulat weist im Rahmen der Erfindung zumindest auch Körner mit einer Korngröße > 0,125 mm auf.

Zuschlagstoffe sind ebenfalls inert und gröber als Zusatzstoffe. Sie bestehen somit nicht wie die Zusatzstoffe ausschließlich aus Mehlkorn, können aber einen Mehlkornanteil aufweisen.

Zuschlagstoffe werden unter anderem anhand ihrer Kornrohdichte eingeteilt und können natürlich, industriell hergestellt oder rezykliert sein. Grundsätzlich unterscheidet man anhand der Kornrohdichte ρ_{Rg} zwischen Leichtzuschlag (leichter Gesteinskörnung) (ρ_{Rg} < 2000 kg/m³), Normalzuschlag (normaler Gesteinskörnung) (ρ_{Rg} = 2000-3000 kg/m³) und Schwerzuschlag (schwerer Gesteinskörnung) (ρ_{Rg} > 3000 kg/m³). Im Rahmen der Erfindung wird der Begriff Dämmstoffgranulat synonym für einen Leichtzuschlagstoff verwendet.

Zusatzmittel werden der Schüttung zugesetzt, um durch chemische oder physikalische Wirkung oder durch beides die Eigenschaften der Schüttungsfrischmasse und/oder der erhärteten Schüttung - wie z.B. Verarbeitbarkeit, Erstarren, Erhärten oder Frostwiderstand - zu beeinflussen. Zusatzmittel werden flüssig, mehl- bzw. pulverförmig oder als Granulat geliefert.

Die DE 296 16 057 U1 offenbart ein Dämmschichtgranulat für einen Dachaufbau zum Ausgleich und als Isolierung aus einem Kunststoff-Hartschaum-Granulat und Kunstharzmörtelpulver. Die Mischung kann zudem u.a. 10-50 Vol.% Gasbetonbruchzuschläge enthalten. Das Kunstharzmörtelpulver weist zudem hydraulisches und latent hydraulisches Bindemittel sowie eine geringe Menge an Hydrophobierungsmittel auf. Der Kunstharzmörtel und das Kunststoff-Hartschaum-Granulat werden zudem in getrennten Säcken auf der Baustelle angeliefert und vor Ort unter Zugabe von Wasser gemischt.

Die DE 41 03 833 A1 offenbart die Verwendung einer Trockenmischung aus 10 bis 40 Gew.-% eines hydrophobierten, mineralischen Schüttgutes aus der Gruppe geblähte Perlite, Bims, Schaumglas, Lava, Blähton und/oder geblähtem Vermiculit mit einer Schüttdichte zwischen 60 und 250 kg/m³ in einer Kornfraktion < 10 mm und 60 bis 90 Gew.-% eines Calciumsulfatträgers, insbesondere in Form von Stuckgips und/oder Alpha-Halbhydrat zur Herstellung einer Ausgleichsschicht (nach Aufsprühen von Wasser auf die zuvor ausgebrachte Trockenmischung) unter Estrichen, insbesondere Fließestrichen.

Die DE 199 48 394 C1 offenbart ein Verfahren zur Verfestigung von mineralischem, porösem Schüttgut, bei dem in einem ersten Schritt Schüttgut mit siliciumorganischem Imprägnierungsmittel (A) imprägniert wird. Das Imprägnierungsmittel (A) ist eine Lösung oder wässrige Emulsion von Verbindungen aus Einheiten der allgemeinen Formel (I)${{R}^{1}}_{a} {\left({OR}^{2}\right)}_{b} {SiO}_{\frac{4 - a - b}{2}}$ (I), worin
R¹ ein Wasserstoff oder einwertigen, gegebenenfalls mit Halogenatomen oder Aminogruppen substituierten C₁-C₁₂-Kohlenwasserstoffrest,
R² Wasserstoffatom, Alkalimetallatom oder einwertigen gegebenenfalls mit Halogenatomen oder Aminogruppen substituierten C₁-C₄-Kohlenwasserstoffrest, a den Wert 0, 1, 2, 3 oder 4 und b den Wert 0, 1, 2, 3 oder 4 bedeuten, mit der Maßgabe, dass die Summe aus a und b grösser 0 und kleiner oder gleich 4 ist. In einem zweiten Schritt wird das imprägnierte Schüttgut mit einer wässrigen Organopolysiloxanbindemittel-Emulsion (B) versetzt, die als wirksamen Bestandteil Organosiloxanharze aus Einheiten der allgemeinen Formel (I) enthält, bei denen a einen Wert von 0,8 bis 1,8, und b einen Wert von 0 bis 0,5 aufweisen und die Summe von a + b maximal einen Wert von 1,9 hat. In einem dritten Schritt wird auf mindestens 50°C erhitzt. Das mineralische poröse Schüttgut wird in Baustoffformkörpern verwendet.

Aus der KR 1999-0001414 A geht ein Isoliermörtel für eine Bodenisolierungsschicht hervor, der auf < 1 mm zerkleinertes Porenbetonmaterial oder Porenbetonkörner mit einer Korngröße < 5 mm aufweist.

Die EP 3 162 777 A1 offenbart eine zementfreie Bindemittelzusammensetzung aufweisend mindestens ein latent hydraulisches Bindemittel, Kalkhydrat sowie mindestens ein Hydrophobierungsmittel. Zudem offenbart die EP 3 162 777 A1, dass die Bindemittelzusammensetzung auch Leichtfüllstoff aus Tobermorit enthalten kann. Gemäß Beispiel 1 der EP 3 162 777 A1 weist die Bindemittelzusammensetzung 30 Gew.-% Hüttensandmehl, 2 Gew.-% Kalkhydrat, 2 Gew.-% Leichtfüllstoffe, 5 Gew.-% sonstige Additive, insbesondere Wasserretentionsmittel und Dispersionspulver, 47 Gew.-% Gesteinskörnung und 13,2 Gew.-% Gesteinsmehl, 0,3 Gew.-% Calciumformiat und 0,5 Gew.-% Calciumlaurat auf. Die Bindemittelzusammensetzung der EP 3 162 777 A1 kann zur Verminderung von Ausblühungen in Putzen verwendet werden.

Die EP 2 336 096 A1 offenbart gepresste Trockenmörtelformkörper, die mindestens ein mineralisches, insbesondere hydraulisches Bindemittel wie Zement und/oder Kalk und/oder Gips und/oder Hüttensandmehl und/oder Puzzolane, vorzugsweise in Mengen von 10 bis 50, insbesondere von 15 bis 35 Gew.-%, mindestens einen mineralischen Zuschlagstoff in Form von Quarzsand und/oder Quarzmehl und/oder Kalksteinmehl und/oder Kalksteinsand, vorzugsweise in Mengen von 50 bis 90, insbesondere von 60 bis 80 Gew.-%, mindestens ein mit Wasser reagierendes Sprengmittel, mindestens ein Presshilfsmittel, gegebenenfalls mindestens ein Zusatzmittel wie Abbinderegler und/oder Fließmittel und/oder Luftporenbildner, Wasserretentionsmittel und/oder Redispersionspulver, vorzugsweise in Mengen bis 5, insbesondere von 0,05 bis 1 Gew.-% aufweisen. Als Presshilfsmittel weisen die Trockenmörtelformkörper mindestens ein mineralisches, poröses oder porosiertes, trockenes Leichtzuschlagstoffgranulat aus CSH-Granulat, z. B. Porenbeton und/oder Schaumbeton, und/oder expandiertem Perlit und/oder expandiertem Vermiculit und/oder Bims und/oder Blähton mit Restfeuchten von maximal 5, insbesondere maximal 3, vorzugsweise maximal 1 Gew.-%, vorzugsweise in Mengen von 3 bis 50, insbesondere von 2 bis 30 Gew.-% und Korndruckfestigkeiten z. B. zwischen 2 und 65, insbesondere zwischen 3 und 30 kN, auf, wobei diese Presshilfsmittel z. B. Korngrößen bis 2 mm aufweisen können.

Aufgabe der vorliegenden Erfindung ist die Bereitstellung einer trockenen Bindemittelmischung für eine gebundene, schüttfähige mineralische Dämmstoffschüttung, die geringe Trocknungszeiten und eine gute Verfestigung der Dämmstoffschüttung gewährleistet.

Weitere Aufgaben sind die Bereitstellung einer Bindemittelfrischmasse mit der Bindemittelmischung, einer gebundenen, schüttfähigen Dämmstoffschüttung mit der Bindemittelmischung, eines Verfahrens zur Herstellung einer verfestigten Dämmstoffschüttung, einer mittels des Verfahrens hergestellten, verfestigten Dämmstoffschüttung sowie einer Verwendung der Dämmstoffschüttung.

Diese Aufgaben werden durch eine Bindemittelmischung mit den Merkmalen von Anspruch 1, eine Bindemittelfrischmasse mit den Merkmalen von Anspruch 12, eine Dämmstoffschüttung mit den Merkmalen von Anspruch 13, ein Verfahren mit den Merkmalen von Anspruch 18, eine verfestigte Dämmstoffschüttung mit den Merkmalen von Anspruch 19 und eine Verwendung der Dämmstoffschüttung mit den Merkmalen von Anspruch 20 gelöst. Vorteilhafte Weiterbildungen der Erfindung sind in den sich jeweils anschließenden Unteransprüchen gekennzeichnet.

Die erfindungsgemäße, trockene Bindemittelmischung weist
a) eine Bindemittelkomponente mit zumindest einem mineralischen, bevorzugt hydraulischen, Bindemittel in einer Menge von 72,0 bis 94,9 M.-%, bevorzugt 82,5 bis 92,3 M.-%,
b) eine Aktivatorkomponente mit einer Korngröße ≤ 1750 µm, bevorzugt ≤ 1500 µm, aus zumindest einem nicht hydrophobierten, hydrothermal gehärteten Poren- oder Schaumbetongranulat in einer Menge von 5 bis 25 M.-%, bevorzugt 7,5 bis 15 M.-%, und
c) eine Verdickerkomponente aus zumindest einem organischen Verdickungsmittel in einer Menge von 0,1 bis 3,0 M.-%, bevorzugt 0,2 bis 2,5 M.-%,
auf.

Für die Formulierung "zumindest bzw. mindestens eine(n) im Rahmen dieser Anmeldung gilt Folgendes: Wenn zumindest bzw. mindestens eine Komponente enthalten sein kann, bedeutet dies, dass auch eine Mischung aus verschiedenen dieser Komponenten enthalten sein kann.

Die erfindungsgemäße Bindemittelmischung wird erfindungsgemäß in einer gebundenen, trockenen, schüttfähigen, unverfestigten Dämmstoffschüttung verwendet.

Die erfindungsgemäße gebundene, trockene, schüttfähige, unverfestigte Dämmstoffschüttung weist eine hydrophobe Dämmstoffkomponente aus zumindest einem hydrophoben Dämmstoffgranulat sowie die erfindungsgemäße Bindemittelmischung auf.

Im Rahmen der Erfindung werden dabei zusätzlich zu der Bindemittelkomponente, der Aktivatorkomponente und der Verdickerkomponente alle inerten Zusatzstoffe, falls vorhanden, und alle weiteren Zusatzmittel, falls vorhanden, der Bindemittelmischung zugerechnet. Die Bindemittelmischung besteht also aus der Bindemittelkomponente, der Aktivatorkomponente und der Verdickerkomponente sowie, falls vorhanden, zumindest einem inerten Zusatzstoff, und/oder, falls vorhanden, zumindest einem weiteren Zusatzmittel.

Infolgedessen weist die Bindemittelmischung, abgesehen von der Aktivatorkomponente sowie gegebenenfalls der Verdickerkomponente und den weiteren Zusatzmitteln, nur mehlförmige Komponenten bzw. Bestandteile auf (= Korngröße ≤ 125 µm).

Die Bindemittelmischung besteht zudem erfindungsgemäß zu mindestens 90 M.-%, bevorzugt zu mindestens 95 M.-%, aus der Bindemittelkomponente, der Aktivatorkomponente und der Verdickerkomponente.

Vorzugsweise handelt es sich bei dem hydrophobem Dämmstoffgranulat um ein hydrophobiertes Poren- oder Schaumbetongranulat. Das hydrophobierte Poren- oder Schaumbetongranulat ist zudem vorzugsweise ein mechanisch zerkleinertes Granulat.

Es kann sich aber auch um ein anderes hydrophobiertes, insbesondere oberflächenhydrophobiertes, mineralisches Dämmstoffgranulat, vorzugsweise hydrophobierten Blähperlit oder hydrophobierten Blähvermiculit oder hydrophobiertes Blähglas oder hydrophobiertes Schaumglas, oder um ein Polystyrolgranulat handeln.

Vorzugsweise beträgt die Gesamtmenge an hydrophobiertem Poren- und/oder Schaumbetongranulat mindestens 70 M.-%, bevorzugt mindestens 90 M.-%, besonders bevorzugt mindestens 95 M.-%, ganz besonders bevorzugt 100 M.-%, bezogen auf die Trockenmasse der hydrophoben Dämmstoffkomponente.

Die Trockenmasse und die Feuchte der hydrophoben Dämmstoffkomponente und aller anderen Komponenten wird im Rahmen der Erfindung, falls nichts anderes angeben, bestimmt durch Trocknung auf Gewichtskonstanz bei 105°C mittels der gravimetrischen Methode (auch Darr-Wäge-Trocknung genannt). Hierbei wird der Wassergehalt der Materialprobe durch den Gewichtsverlust beim Trocknen bestimmt. Direkt nach der Entnahme wird Materialprobe luftdicht verpackt und gewogen. Die Probe wird anschließend in einem Trockenschrank so lange bei 105 °C getrocknet, bis sich bei aufeinanderfolgenden Wägungen die Gewichtskonstanz einstellt.

Erfindungsgemäß beträgt die Menge an hydrophober Dämmstoffkomponente 50 bis 90 M.-%, bevorzugt 55 bis 85 M.-%, besonders bevorzugt 65 bis 83 M.-%, bezogen auf die Trockenmasse der Dämmstoffschüttung.

Die die Dämmstoffschüttung betreffenden Mengenangaben beziehen sich, falls nicht anders angegeben, immer auf die Trockenmasse der Dämmstoffschüttung, auch wenn dies nicht explizit erwähnt ist.

Zudem werden Korngrößen, falls nicht anders angegeben, immer durch Bestimmung des Siebdurchgangs gemäß DIN EN 1015-1:2007-05 ermittelt, auch wenn dies nicht explizit erwähnt ist.

Vorzugsweise weist die hydrophobe Dämmstoffkomponente eine Korngröße ≤ 10 mm, bevorzugt ≤ 8 mm, besonders bevorzugt ≤ 6 mm, auf.

Des Weiteren weist die hydrophobe Dämmstoffkomponente vorzugsweise einen Siebdurchgang bei 8 mm von 100 M.-% und/oder bei 5 mm von 80 bis 100 M.-% und/oder bei 4 mm zwischen 60 und 80 M.-% und/oder bei 2 mm von 20 bis 50 M.-%, besonders bevorzugt von 25 bis 45 M.-%, und/oder bei 1 mm von 5 bis 15 M.-%, auf.

Die Sieblinie der hydrophoben Dämmstoffkomponente ist bezüglich der Korngrößenverteilung so abgestimmt, dass durch den Grobkornanteil > 5 mm ausreichend Zwischenkornvolumen für kleinere Partikel, aber auch genügend "Luftpolster" zwischen den einzelnen Partikeln für die Dämmeigenschaften nach dem Abbinden zur Verfügung gestellt werden. Das Zwischenkorn < 2 mm dient gemeinsam mit der Bindemittelmischung zum partiellen Auffüllen der Hohlräume sowie zum Einschließen der groben Granulatkörner an der Oberfläche der gebundenen Dämmstoffschüttung, zur Ausbildung stabiler Zwickel zwischen den Granulatkörnern sowie der Realisierung einer glatten abziehbaren Oberfläche.

Vorzugsweise weist die hydrophobe Dämmstoffkomponente außerdem eine Schüttdichte von 250 bis 550 kg/m³, bevorzugt 280 bis 530 kg/m³, besonders bevorzugt von 300 bis 500 kg/m³, bestimmt gemäß DIN EN 1097-3:1998-06, auf.

Vorzugsweise weist das hydrophobe, mineralische Dämmstoffgranulat zudem eine oberflächliche Hydrophobierung bzw. Oberflächenhydrophobierung auf. Es kann, insbesondere im Fall des Poren- oder Schaumbetongranulats, aber auch massenhydrophobiert sein.

Die, vorzugsweise oberflächliche, Hydrophobierung des hydrophoben, mineralischen Dämmstoffgranulats besteht zudem vorzugsweise aus Silikonharz. Sie wird erzeugt durch die Hydrophobierung des mineralischen Dämmstoffgranulats mit einem siliciumorganischen Hydrophobierungsmittel.

Siliciumorganische Hydrophobierungsmittel reagieren bekanntermaßen chemisch mit silikatischen Baustoffen und wachsen damit fest auf dem Baustoff auf. Sie führen zur Bildung eines beständigen, wasserabweisenden Silikonharzfilms, dessen Silikonharzmoleküle chemisch fest auf der Oberfläche des Baustoffs gebunden sind. Die hydrophoben organischen Reste R weisen von der Baustoffoberfläche weg.

Des Weiteren weisen die siliciumorganischen Hydrophobierungsmitteln in der Regel Silane, Siloxane, Silikonharze oder Silikonate oder Mischungen daraus auf.

Die Hydrophobierung mit siliciumorganischen Hydrophobierungsmittel bewirkt, dass kein Wasser mehr in den Baustoff eindringen kann. Die Wasserdampfdurchlässigkeit bleibt aber bestehen.

Durch eine oberflächliche Hydrophobierung bzw. Oberflächenhydrophobierung werden die Porenoberflächen der kapillarsaugenden Poren der Granulatkörner gegen das Eindringen von Feuchtigkeit imprägniert. Zudem werden die äußeren Kornoberfläche hydrophobiert. Bei der oberflächlichen Hydrophobierung gelangt das Hydrophobierungsmittel durch kapillares Saugen in die kapillarsaugenden Poren des Granulatkorn und es gelangt zudem an die äußere Kornoberfläche der Granulatkörner und reagiert zu dem mit der jeweiligen Oberfläche verbundenen Silikonharzfilm.

Ist das mineralische Dämmstoffgranulat massenhydrophobiert, wird es hergestellt durch mechanische Zerkleinerung eines massenhydrophobierten Formkörpers. Bei der Massenhydrophobierung wird das jeweilige Hydrophobierungsmittel bei der Herstellung des Formkörpers der Frischmasse zugegeben. Als Hydrophobierungsmittel werden vorzugsweise ebenfalls die oben genannten Hydrophobierungsmittel verwendet. Auch die Massenhydrophobierung führt in an sich bekannter Weise zur Bildung eines Silikonharzfilms auf den inneren Porenoberflächen des hergestellten Baustoffs, insbesondere des Formkörpers, bevorzugt des Poren- oder Schaumbetonformkörpers. Dieser wird zur Herstellung des massenhydrophobierten Dämmstoffgranulats, vorzugsweise des massenhydrophobierten Poren- oder Schaumbetongranulats, dann mechanisch zerkleinert, insbesondere gebrochen.

Im Rahmen der Erfindung erfolgt die oberflächliche Hydrophobierung des mineralischen Dämmstoffgranulats, vorzugsweise des Poren- oder Schaumbetongranulats, vorzugsweise wie folgt:
Es wird ein nicht hydrophobiertes mineralisches Dämmstoffgranulat, vorzugsweise ein nicht hydrophobiertes Poren- oder Schaumbetongranulat, verwendet, das eine Restfeuchte von ≤ 10 M.-%, vorzugsweise ≤ 8 M.-%, bevorzugt ≤ 6 M.-%, aufweist.

Dazu wird das nicht hydrophobierte mineralische Dämmstoffgranulat, vorzugsweise das nicht hydrophobierte Poren- oder Schaumbetongranulat, falls notwendig, auf die Restfeuchte getrocknet.

Wird beispielsweise recyceltes mineralisches, nicht hydrophobiertes Dämmstoffgranulat, vorzugsweise recyceltes nicht hydrophobiertes Poren- oder Schaumbetongranulat (=Ausbruchmaterial bzw. Abbruchmaterial) verwendet, kann die Trocknung beispielsweise entfallen, da dieses Material bereits die gewünschte Restfeuchte aufweisen kann.

Das mineralische Dämmstoffgranulat, vorzugsweise das Poren- oder Schaumbetongranulat, wird mit einer Emulsion eines siliciumorganischen Hydrophobierungsmittels besprüht. Dabei gelangt das Hydrophobierungsmittel nicht nur an die äußeren Kornoberflächen der Granulatkörner, sondern, insbesondere durch kapillares Saugen, auch in die Poren, insbesondere die Kapillarporen, der Granulatkörner, also an die inneren Oberflächen bzw. Porenoberflächen der Granulatkörner. Die Granulatkörner werden also mit dem Hydrophobierungsmittel imprägniert. Es bildet sich also ein Silikonharzfilm auf den äußeren Kornoberflächen und den Porenoberflächen der Kapillarporen der Granulatkörner.

Vorzugsweise handelt es sich bei der Emulsion des siliciumorganischen Hydrophobierungsmittels um eine Emulsion eines Siloxans, bevorzugt eines Silikonöls, besonders bevorzugt eines Polydimethylsiloxans. Es kann sich aber auch um eine Emulsion eines Silans oder eines Gemisches aus den genannten Komponenten handeln.

Als Lösungsmittel weist die Emulsion vorzugsweise Wasser auf. Es kann sich aber auch um Ethanol oder ein Ethanol-Wasser-Gemisch handeln.

Vorzugsweise beträgt der Wirkstoffgehalt der Emulsion zudem 0,6 bis 12 M.-%, bevorzugt 1 bis 10 M.-%, bezogen auf die Trockenmasse des nicht hydrophobierten mineralischen Dämmstoffgranulats, vorzugsweise des nicht hydrophobierten Poren- oder Schaumbetongranulats.

Des Weiteren wird die Menge an Hydrophobierungsmittel vorzugsweise derart bemessen, dass das mit der Emulsion besprühte und gemischte mineralische Dämmstoffgranulat, vorzugsweise Poren- oder Schaumbetongranulat, eine Feuchte von 5 bis 15 M.-%, bevorzugt 6 bis 12 M.-%, besonders bevorzugt 8 bis 10 M.-% aufweist.

Je nach Ausgangsfeuchte des zu hydrophobierenden Dämmstoffgranulats sowie unter Berücksichtigung der maximalen Restfeuchte nach der Hydrophobierung, kann der Wirkstoffgehalt der Emulsion entsprechend variiert werden. Es ist auf eine ausreichende Verteilung des Wirkstoffs auf allen Oberflächen der Granulatkörner (nicht nur der äußeren Kornoberfläche sondern auch der inneren Oberflächen) zu achten, damit das hydrophobe Netzwerk des Wirkstoffs gleichmäßig ausgebildet werden kann.

Das mit dem Hydrophobierungsmittel besprühte und gemischte mineralische Dämmstoffgranulat, vorzugsweise Poren- oder Schaumbetongranulat, wird anschließend umgehend in ein feuchtigkeitsdichtes Behältnis, vorzugsweise einen feuchtigkeitsdichten Sack, gefüllt.

In dem Behältnis wird das Hydrophobierungsmittel aushärten bzw. altern gelassen, so dass sich der oberflächliche Silikonharzfilm bildet. Die Aushärtezeit beträgt dabei insbesondere mindestens 12 Tage, bevorzugt 14 Tage. Durch technische Maßnahmen wie Anwendung von erhöhten Temperaturen kann die Aushärtezeit verkürzt werden.

Die aus dem zumindest einen hydrophoben Dämmstoffgranulat bestehende hydrophobe Dämmstoffkomponente weist zudem vorzugsweise eine Wasseraufnahme von 2 bis 16 M.-%, bevorzugt 4 bis 12 M.-%, besonders bevorzugt 6 bis 10 M.-%, bestimmt mittels Westinghouse-Methode nach DIN CEN/TS 15366:2010-03, auf.

Die Bindemittelkomponente der erfindungsgemäßen Bindemittelmischung weist vorzugsweise Portlandzementklinker und zumindest einen Erstarrungsregler auf. Bei dem zumindest einen Erstarrungsregler handelt es sich vorzugsweise um Gips oder Halbhydrat oder Anhydrit.

Zudem kann die Bindemittelkomponente zumindest einen latent hydraulischen Zusatzstoff, bevorzugt Hüttensand, und/oder zumindest einen puzzolanischen Zusatzstoff, bevorzugt Silicastaub und/oder Flugasche und/oder calcinierten Ton, aufweisen.

Die Bindemittelmischung kann zudem mindestens einen inaktiven bzw. inerten Zusatzstoff, vorzugsweise natürliches Kalksteinmehl und/oder gefälltes Calciumcarbonat (PCC) aufweisen.

Vorzugsweise beträgt die Gesamtmenge an inaktivem bzw. inertem Zusatzstoff in der Bindemittelmischung 0 bis 15 M.-%, bevorzugt 0 bis 10 M.-%, besonders bevorzugt 0 bis 5 M.-%.

Insbesondere weist die Bindemittelmischung einen Portlandzement (CEM I) und/oder einen anderen genormten Zement, z.B. einen CEM II und/oder einen CEM III und/oder einen CEM IV gemäß DIN EN 197-1:2011-11 auf.

Vorzugseise weist die Bindemittelmischung einen SR-Zement (sulfate resistent) gemäß DIN EN 197-1:2011-11 auf.

Werden Zemente gemäß DIN EN 197-1:2011-11 verwendet, die zusätzlich zum Portlandzement und dem Erstarrungsregler inerte Zusatzstoffe enthalten, werden diese Zusatzstoffe zu den inerten Zusatzstoffen gerechnet und nicht zum Bindemittelanteil bzw. der Bindemittelkomponente. Und alle reaktiven Bestandteile des Zements werden der Bindemittelkomponente zugerechnet.

Vorzugsweise beträgt der Anteil an Portlandzementklinker und Erstarrungsregler, bezogen auf die Bindemittelmischung, 20 bis 90 M.-%, bevorzugt 24 bis 88 M.-%.

Erfindungsgemäß beträgt die Menge an Bindemittelmischung 10 bis 50 M.-%, bevorzugt 15 bis 45 M.-%, besonders bevorzugt 17 bis 35 M.-% bezogen auf die Trockenmasse der Dämmstoffschüttung.

Wie bereits erläutert, weist die Bindemittelmischung zudem zumindest ein Zusatzmittel in Form eines organischen Verdickungsmittels auf.

Ein Verdickungsmittel erhöht bekanntermaßen die Viskosität der wässrigen Mischung, der es zugesetzt wird. Oftmals sind Verdickungsmittel zudem Stoffe, die in erster Linie in der Lage sind, Wasser zu binden. Durch Entzug von ungebundenem Wasser kommt es zur Erhöhung der Viskosität. Ab einer für jedes Verdickungsmittel charakteristischen Konzentration treten zu diesem Effekt noch Netzwerkeffekte auf, die zu einer meist überproportionalen Erhöhung der Viskosität führen. In diesem Fall wird davon gesprochen, dass Moleküle miteinander kommunizieren, also verschlaufen. Die meisten Verdickungsmittel sind lineare oder verzweigte Makromoleküle (wie Polysaccharide oder Proteine), die durch intermolekulare Wechselwirkungen, wie Wasserstoffbrücken, hydrophobe Wechselwirkungen oder Ionenbeziehungen miteinander interagieren können.

Das organische Verdickungsmittel ist erfindungsgemäß vorhanden, um die Anfangshaftung zwischen den hydrophoben Kornoberflächen der Granulatkörner des hydrophoben Dämmstoffgranulats und der mit Anmachwasser gemischten Bindemittelmischung zu gewährleisten. Dadurch wird insbesondere auch das Aufschwimmen der Granulatkörner verhindert.

Vorzugsweise handelt es sich bei dem zumindest einen Verdickungsmittel um Methylcellulose, bevorzugt Methylhydroxyethylcellulose.

Das Verdickungsmittel, vorzugsweise die Methylcellulose, bevorzugt die Methylhydroxyethylcellulose, ist zudem vorzugsweise nicht anquellverzögert.

Die Verdickerkomponente weist zudem vorzugsweise einen d₉₀-Wert von 145 bis 200 µm und/oder einen d₅₀-Wert von 55 bis 90 µm und/oder einen d₁₀-Wert von 20 bis 45 µm auf, jeweils bestimmt mittels Laserlichtbeugung gemäß DIN ISO13320:2022-12.

Zudem weist die Verdickerkomponente vorzugsweise eine Korngröße ≤ 250 µm, bestimmt mittels Laserlichtbeugung gemäß DIN ISO13320:2022-12, auf.

Die Viskosität der Verdickerkomponente, bestimmt gemäß DIN 53015:2019-06 an einer wässrigen Lösung (20 °C, 20 °dH) mit 1,9 M.-% der Verdickerkomponente, liegt vorzugsweise zwischen 15000 und 150000 mPas, bevorzugt zwischen 50000 und 150000 mPas, besonders bevorzugt zwischen 100000 und 150000 mPas.

Zudem dient das organische Verdickungsmittel vorzugsweise zugleich als Wasserretentionsmittel. Dadurch wird gewährleistet, dass ausreichend Wasser für die Hydratation der Bindemittelkomponente zur Verfügung steht. Die Verdickerkomponente hält also das Wasser in der Bindemittelphase und verhindert gleichzeitig ein Abperlen der mit Wasser angemachten Bindemittelmischung von den Granulatkörnern.

Vorzugsweise weist die Bindemittelmischung zudem zumindest ein weiteres organisches Zusatzmittel auf. Vorzugsweise handelt es sich bei dem zumindest einen weiteren organischen Zusatzmittel um ein Fließmittel oder einen Verflüssiger. Vorzugsweise weist die Bindemittelmischung 0,25 bis 1,5 M.-%, bevorzugt 0,5 bis 1,0 M.-%, Fließmittel und/oder Verflüssiger in Summe auf.

Verflüssiger und Fließmittel, die unter anderem aus der Betontechnologie bekannt sind, verbessern bekanntermaßen die Verarbeitbarkeit der Schüttungsfrischmasse bei gleichem Wassergehalt und/oder verbessern die Eigenschaften der erhärteten Dämmstoffschüttung durch Verminderung der Wasserzugabe. Verflüssiger haben dabei eine geringere verflüssigende Wirkung als Fließmittel. Die jeweilige Deklarierung als Verflüssiger oder Fließmittel erfolgt in der Regel durch den Hersteller.

Es kann sich bei dem Zusatzmittel, insbesondere zusätzlich, aber auch um einen Beschleuniger oder ein Dispersionsmittel handeln.

Vorzugsweise weist die Bindemittelmischung 0,35 bis 5 M.-%, bevorzugt 0,5 bis 4 M.-%, organische Zusatzmittel auf.

Wie bereits erläutert, weist die Bindemittelmischung erfindungsgemäß zudem die Aktivatorkomponente aus zumindest einem, nicht hydrophobierten Poren- oder Schaumbetongranulat auf.

Im Rahmen der Erfindung wurde überraschenderweise herausgefunden, dass das nicht hydrophobierte Poren- oder Schaumbetongranulat den Erstarrungsbeginn der Bindemittelmischung deutlich beschleunigen kann. Worauf diese Wirkung beruht, ist noch nicht geklärt. Aus diesem Grund wird die Aktivatorkomponente im Rahmen der Erfindung, auch aufgrund ihrer gröberen Korngröße, nicht der Bindemittelkomponente und auch nicht den inerten Zusatzstoffen zugerechnet, sondern als zusätzliche, eigenständige Komponente angesehen.

Auch verringert die Aktivatorkomponente die Viskosität der Bindemittelmischung und verbessert dadurch die Haftung an den hydrophoben Granulatkörnern.

Die Aktivatorkomponente weist vorzugsweise einen d₉₀-Wert von 750 bis 1500 µm, bevorzugt von 800 bis 1250 µm, bestimmt mittels Laserlichtbeugung gemäß DIN ISO13320:2022-12, auf.

Zudem weist die Aktivatorkomponente vorzugsweise einen d₅₀-Wert von 200 bis 1000 µm, bevorzugt 250 bis 900 µm, bestimmt mittels Laserlichtbeugung gemäß DIN ISO13320:2022-12, auf.

Des Weiteren weist die Aktivatorkomponente vorzugsweise einen d₁₀-Wert von 10 bis 750 µm, bevorzugt von 15 bis 550 µm, bestimmt mittels Laserlichtbeugung gemäß DIN ISO13320:2022-12, auf.

Außerdem handelt es sich bei dem nicht hydrophobierten Poren- oder Schaumbetongranulat der Aktivatorkomponente vorzugsweise um ein mechanisch zerkleinertes Granulat.

Vor dem Zumischen der Aktivatorkomponente zu den übrigen Komponenten der Bindemittelmischung wird diese zudem vorzugsweise auf eine Restfeuchte von ≤ 5 M.-%, vorzugsweise ≤ 3 M.-%, besonders bevorzugt ≤ 2 M.-% getrocknet. Die Restfeuchte wird wie oben angegeben bestimmt.

Im Rahmen der Erfindung wurde zudem festgestellt, dass für gute Eigenschaften der mit Wasser angemischten und der verfestigten Dämmstoffschüttung die rheologischen Eigenschaften der erfindungsgemäßen Bindemittelmischung eine Rolle spielen. Dazu wird die Bindemittelmischung mit Wasser zu einer Bindemittelfrischmasse angemischt und die jeweilige rheologische Eigenschaft, insbesondere das Ausbreitmaß, bestimmt. Der w/f-Wert der Bindemittelmischung für die Bestimmung des Ausbreitmaßes beträgt 1.

Vorzugsweise weist die Bindemittelfrischmasse ein Ausbreitmaß von 22 bis 37 cm, bevorzugt 25 bis 35 cm, auf. Das Ausbreitmaß wird branchenüblich gemessen. Ein Metallring mit 69 mm Innendurchmesser und 59 mm Höhe wird hierzu mittig auf eine trockene Glasplatte aufgesetzt und bis zum Rand mit Bindemittelfrischmasse gefüllt. Sofort im Anschluss wird der Ring schnell waagerecht angehoben und die Bindemittelfrischmasse breitet sich fast kreisrund aus. Der Durchmesser des Kreises wird zweimal senkrecht zueinander gemessen und der Mittelwert auf 0,5 cm genau angegeben.

Des Weiteren kann die Dämmstoffschüttung zusätzlich zu der hydrophoben Dämmstoffkomponente auch zumindest ein weiteres, nicht hydrophobiertes Dämmstoffgranulat aufweisen. Vorzugsweise liegt die Gesamtmenge an weiterem, nicht hydrophobierten Dämmstoffgranulat aber bei 0 bis 5 M.-%, bezogen auf die Trockenmasse der Dämmstoffmischung.

Die Dämmstoffschüttung weist zudem vorzugsweise keinen Normalzuschlagstoff und keinen schweren Zuschlagstoff auf.

Vorzugsweise besteht die Dämmstoffschüttung zu mindestens 85 M.-%, bevorzugt zu mindestens 90 M.-%, besonders bevorzugt zu mindestens 95 M.- %, aus der hydrophoben Dämmstoffkomponente und der Bindemittelmischung.

Die nachfolgend genannten Eigenschaftswerte werden an abgebundenem Material der erfindungsgemäßen Dämmstoffschüttung ermittelt, wobei die Dämmstoffschüttung mit Anmachwasser vermischt wird und der w/b-Wert (Wasser/Bindemittelwert) 1,0 ist. Das heißt, die Masse an Anmachwasser entspricht der Masse an Bindemittelmischung.

Die Trockenrohdichte nach 28 Tagen gemäß DIN EN 772-13:2000-09 der Dämmstoffschüttung beträgt zudem vorzugsweise 400 bis 700 kg/m³, bevorzugt 450 bis 650 kg/m³. Für die Prüfung der Trockenrohdichte gemäß DIN EN 772-13:2000-09 werden im Rahmen der Erfindung Würfel mit 100 mm Kantenlänge hergestellt.

Zudem weist die Dämmstoffschüttung vorzugsweise eine Druckfestigkeit nach 28 Tagen gemäß DIN EN 772-1:2016-05 von 0,200 N/mm² bis 0,900 N/mm², bevorzugt 0,350 bis 0,750 N/mm², auf. Für die Prüfung der Druckfestigkeit gemäß DIN EN 772-1:2016-05 werden im Rahmen der Erfindung ebenfalls Würfel mit 100 mm Kantenlänge hergestellt.

Des Weiteren weist die Dämmstoffschüttung vorzugsweise nach 28 Tagen eine Wärmeleitfähigkeit λ_{10,trocken} gemäß DIN EN 1745:2020-10 von 0,08 bis 0,16 W/m·K, bevorzugt 0,09 bis 0,13 W/m·K, auf. Für die Prüfung der Wärmeleitfähigkeit λ_{10,trocken} gemäß DIN EN 1745:2020 werden im Rahmen der Erfindung 250 x 250 mm große Platten mit einer Höhe von 40 mm hergestellt.

Zudem weist die Dämmstoffschüttung unter Normalbedingungen vorzugsweise eine Belegreife spätestens nach 28 Tagen, bevorzugt nach 14 Tagen, auf. Die Belegreife ist erreicht, wenn die gebundene Dämmstoffschüttung eine maximale Feuchte von 20 M.-%, bevorzugt 16 M.-%, besonders bevorzugt von 12 M.-%, bestimmt mittels der gravimetrischen Methode (auch Darr-Wäge-Trocknung genannt). Hierbei wird der Wassergehalt der Materialprobe durch den Gewichtsverlust beim Trocknen bestimmt. Direkt nach der Entnahme einer Materialprobe über die gesamte Schüttungshöhe (Berücksichtigung des Feuchtegradienten innerhalb der Schüttung, da Austrocknung nur über die Oberfläche erfolgt), wird die Materialprobe luftdicht verpackt und gewogen. Die Probe wird anschließend in einem Trockenschrank so lange bei 105 °C getrocknet, bis sich bei aufeinanderfolgenden Wägungen die Gewichtskonstanz einstellt.

Des Weiteren liegt die Dämmstoffschüttung vor ihrer Verwendung zur Herstellung einer ausgehärteten Dämmstoffschüttung wie bereits erläutert in schüttfähiger bzw. nicht formstabiler Form vor.

Vorzugsweise ist die Dämmstoffschüttung dabei in zwei verschiedenen Behältnissen abgepackt, die zusammen als eine Einheit an den jeweiligen Verwendungsort geliefert werden.

Insbesondere weist die Dämmstoffschüttung ein erstes Gemenge, vorzugsweise ein Dämmstoffgemenge, auf, welches die hydrophobe Dämmstoffkomponente und gegebenenfalls vorhandenes nicht hydrophobiertes Dämmstoffgranulat und/oder normale Zuschlagstoffe aufweist. Das erste Gemenge ist in einem ersten Behältnis angeordnet bzw. abgepackt.

Zudem weist die Dämmstoffschüttung ein zweites Gemenge, vorzugsweise ein Bindemittelgemenge, mit der Bindemittelmischung auf. Das zweite Gemenge ist in einem zweiten Behältnis angeordnet bzw. abgepackt. Dies ist vorteilhaft, da das hydrophobierte Dämmstoffgranulat in der Regel eine geringe Restfeuchte aufweist. Um zu verhindern, dass die Bindemittelkomponente mit der Restfeuchte reagiert, wird das hydrophobierte Dämmstoffgranulat getrennt abgepackt. Zudem wird dadurch eine Entmischung beim Transport verhindert, also dass sich die feinteilige Bindemittelkomponente unten im Behältnis absetzt.

Die Aktivatorkomponente kann aber beispielsweise auch in dem ersten Gemenge enthalten sein oder es kann ein drittes Gemenge vorhanden sein, das ausschließlich die Aktivatorkomponente enthält und in einem dritten Behältnis angeordnet bzw. abgepackt ist.

Grundsätzlich können die einzelnen Komponenten bzw. Bestandteile der Dämmstoffschüttung beliebig einzeln oder zusammen abgepackt werden. Falls jedoch das zumindest eine Bindemittel mit dem hydrophobierten Dämmstoffgranulat zusammen abgepackt wird, sollte die Restfeuchte des hydrophobierten Dämmstoffgranulats nicht zu hoch sein, um eine Reaktion des Bindemittels zu vermeiden.

Es können auch alle oder einzelne Komponenten bzw. Bestandteile der Dämmstoffschüttung erst an der Baustelle zusammen mit dem Anmachwasser miteinander gemischt werden.

Die Behältnisse sind vorzugsweise jeweils luft- und feuchtigkeitsdicht. Insbesondere handelt es sich um Säcke oder Silos.

Am Verwendungsort wird die Dämmstoffschüttung dann in an sich bekannter Weise in einem Mischer, insbesondere einem Zwangsmischer, unter Zugabe von Anmachwasser gemischt und eine Schüttungsfrischmasse hergestellt, die aus der Dämmstoffschüttung bzw. den Bestandteilen der Dämmstoffschüttung und dem Anmachwasser besteht. Vorzugsweise weist die Schüttungsfrischmasse einen w/f-Wert von 0,15 bis 0,50, bevorzugt 0,17 bis 0,46 auf.

Die Schüttungsfrischmasse wird dann auf den jeweiligen Untergrund aufgebracht, vorzugsweise verdichtet und/oder abgezogen, und aushärten gelassen. Nach dem Aushärten liegt die Dämmstoffschüttung also in Form einer formstabilen Schicht bzw. Dämmstoffschüttungsschicht, vorzugsweise einer Ausgleichsschicht zum Ausgleichen von Unebenheiten des Untergrunds, vor.

Vorzugsweise wird die Dämmstoffschüttung zur Herstellung einer Dämmstoffschüttungsschicht eines Fußbodenaufbaus und/oder eines Dachaufbaus und/oder einer Ausgleichsschüttungsschicht einer Installationsebene verwendet. Gemäß der DIN 18560-2:2022-08 sind die in der Installationsebene befindlichen Leitungen (sowohl Strom als auch Wasser/Abwasser) in gebundener Form zu überdecken.

Vorteilhaft bei der erfindungsgemäßen Dämmstoffschüttung ist, dass durch die Kombination aus dem hydrophoben Dämmstoffgranulat, insbesondere dem hydrophobierten Poren- und/oder Schaumbetongranulat, mit der erfindungsgemäßen Bindemittelmischung, die notwendige Anfangshaftung zwischen Bindemittelfrischmasse und Dämmstoffgranulatkörnern sowie die Realisierung einer schnellen Belegbarkeit (Feuchtehaushalt/Austrockung) bei guten Produkteigenschaften wie Druckfestigkeit und Wärmeleitfähigkeit gewährleistet wird.

Abschließend wird darauf hingewiesen, dass alle genannten, insbesondere beanspruchten, Merkmale der Bindemittelmischung, der Dämmstoffschüttung und der Verfahren sowie der Verwendungen für sich genommen und in jeglicher Kombination besonders vorteilhaft und Gegenstand der vorliegenden Erfindung sind.

Zudem sind die jeweils angegebenen Ober- und Untergrenzen der einzelnen Bereichsangaben erfindungsgemäß alle miteinander kombinierbar.

### Ausführungsbeispiele:

### 1. Herstellung und Eigenschaften der oberflächenhydrophobierten Porenbetongranulate

**Tabelle 1: Rohstoffe oberflächenhydrophobiertes Porenbetongranulat**

| **Bezeichnung** | **Kurzbezeichnung** | **Hersteller** |
|---|---|---|
| **Porenbetongranulat 1 (PG 1)** | 0-8 mm | Abbruchmaterial |
| **Porenbetongranulat 2 (PG 2)** | 0-8 mm | Xella Rotenburg, Nebenprodukt aus Produktion |
| **Porenbetongranulat 3 (PG 3)** | 0-8 mm | Xella Rotenburg, Nebenprodukt aus Produktion |
| **Hydrophobierungsmittel** | SILRES BS 1042 | Wacker |

**Tabelle 2: Kornverteilung Porenbetongranulate 0-8 mm vor Hydrophobierung**

| **Siebgröße** | **Siebdurchgang [M.-%]** | | |
|---|---|---|---|
| | **Porenbetongranulat 1** | **Porenbetongranulat 2** | **Porenbetongranulat 3** |
| **8 mm** | 100 | 100 | 100 |
| **5 mm** | 95,02 | 92,34 | 85,75 |
| **4 mm** | 82,33 | 84,88 | 67,96 |
| **2 mm** | 45,68 | 53,81 | 26,86 |
| **1 mm** | 10,32 | 7,36 | 5,54 |
| **0,5 mm** | 2,75 | 0,70 | 0,99 |
| **0,125** | 1,34 | 0,22 | 0,06 |

**Tabelle 3: Daten Hydrophobierung**

| | **PG 1** | **PG 2** | **PG 3** |
|---|---|---|---|
| **Menge Hydrophobierungsmittel [l/m³ Porenbetongranulat]** | 5 | 42 | 24 |
| **Menge Wasser [l/m³ Porenbetongranulat]** | 50 | 18 | 60 |
| **Feuchte Porenbetongranulat vor Hydrophobierung (105°C) [M.%]** | 1,60 | 5,67 | 1,09 |
| **Feuchte Porenbetongranulat nach Hydrophobierung (105°C) [M.%]** | 15,04 | 10,01 | 7,64 |
| **Wasseraufnahme nach Hydrophobierung [M.-%]** | 10,71 | 8,18 | 10,78 |
| **Alterung mit oder ohne aktive Trocknung** | 24 h bei 105 °C | ohne | ohne |
| **Schüttdichte Porenbetongranulat vor Hydrophobierung [kg/m³]** | 412 | 377 | 376 |
| **Schüttdichte Porenbetongranulat nach Hydrophobierung [kg/m³]** | 429 | 421 | 414 |

**Tabelle 4: Kornverteilung oberflächenhydrophobierte Porenbetongranulate**

| **Siebgröße** | **Siebdurchgang [M.-%]** | | |
|---|---|---|---|
| | **Porenbetongranulat 1** | **Porenbetongranulat 2** | **Porenbetongranulat 3** |
| **8 mm** | 100 | 100 | 100 |
| **5 mm** | 98,64 | 90,06 | 88,72 |
| **4 mm** | 88,48 | 79,59 | 71,94 |
| **2 mm** | 47,30 | 47, 48 | 27,95 |
| **1 mm** | 12,48 | 13,85 | 6,88 |
| **0,5 mm** | 3,17 | 1,47 | 1,49 |
| **0,125 mm** | 1,18 | 0,35 | 0,43 |

Die oberflächliche Hydrophobierung der Porenbetongranulate 0-8 mm erfolgte jeweils wie folgt:
Zunächst wurde das Porenbetongranulat getrocknet. Das getrocknete Porenbetongranulat wurde in einen Mischer der Firma Eirich, Maschinentyp RV 23, gefüllt. Das Hydrophobierungsmittel wurde mit dem Wasser vorgemischt. Die wässrige Emulsion des Hydrophobierungsmittels wurde in der entsprechenden Konzentration in einem Vorratsbehälter vorgelegt. Die Besprühung erfolgte bei laufendem Mischbehälter über die Dosierklappe des Mischers mit Hilfe einer Pumpe (4 bar Förderdruck) und über vier Sprühdüsen.

Das mit der wässrigen Emulsion des Hydrophobierungsmittels besprühte und gemischte Porenbetongranulat wurde anschließend, mit oder ohne vorherige Trocknung (siehe Tabelle), in einen feuchtigkeitsdichten Sack gefüllt und das Hydrophobierungsmittel für 14 Tage aushärten gelassen, anschließend erfolgte umgehend die Prüfung zur Wasseraufnahme. Die Bestimmung der Feuchte erfolgt umgehend nach der Besprühung.

### 2. Herstellung und Eigenschaften des massenhydrophobierten Porenbetongranulats 4 (PG 4)

Es wurde ein massenhydrophobierter Porenbetonformkörper der Rohdichteklasse 450 kg/m³ mit einem C/S Verhältnis von 0,56 sowie einem Wasser-Feststoff-Wert von 0,86 hergestellt. Die Porenbetonfrischmasse enthielt zudem 40 M.-% getrocknetes Porenbetongranulat 0-1,75 mm aus der Produktion sowie 1 M.-% des Hydrophobierungsmittels Wacker/AK 500, bezogen auf die Summe Feststoffe. Das Kalk zu Zement Masseverhältnis war 1. Die Abgusstemperatur lag bei 48,5 °C. Das Ausbreitmaß betrug 28 cm. Die Autoklavierung erfolgte bei 12 bar Sattdampf. Die Auf-/Abfahr- sowie Haltezeit betrugen jeweils 6 Stunden.

Anschließend wurde der autoklavierte massenhydrophobierte Porenbetonformkörper zur Herstellung des Porenbetongranulats gebrochen und abgesiebt.

**Tabelle 5: Kornverteilung massenhydrophobiertes Porenbetongranulat**

| **Siebgröße** | **Siebdurchgang [M.-%]** |
|---|---|
| | **Porenbetongranulat 4** |
| **8 mm** | 100 |
| **5 mm** | 79,03 |
| **4 mm** | 62,65 |
| **2 mm** | 34,00 |
| **1 mm** | 7,17 |
| **0,5 mm** | 1,37 |
| **0,125 mm** | 0,54 |

### 3. Herstellung und Eigenschaften der Bindemittelmischung

**Tabelle 6: Rohstoffe und Zusammensetzung Bindemittelmischung**

| **Bezeichnung** | **Kurzbezeichnung** | **Hersteller** | **Anteil [M.-%]** |
|---|---|---|---|
| Zement | CEM III/A 52.5 N-SR (na) | Holcim, Dortmund | 87,5 |
| Aktivatorkomponente | Porenbetongranulat 0 - 1,75 mm | Xella Deutschland GmbH | 11,0 |
| Verdickungsmittel | Tylose MHS 150003 P4 | SE Tylose GmbH | 0,5 |
| Fließmittel | Naftalinico Dehscofix 158 | alpha chemicals industrial | 1,0 |

**Tabelle 7: Kornverteilung Porenbetongranulat 0-1750 µm**

| **Korngrößenverteilung bestimmt mittels Laserlichtbeugung** | |
|---|---|
| **d₉₀ [µm]** | 852 |
| **d₅₀ [µm]** | 496 |
| **d₁₀ [µm]** | 214 |
| **V₁₇₅₀ [Vol.-%]** | 100,00 |
| **V₁₂₃₀ [Vol.-%]** | 99,55 |
| **V₇₃₀ [Vol.-%]** | 81,52 |
| **V₅₁₀ [Vol.-%]** | 52,51 |
| **V₂₅₀ [Vol.-%]** | 12,25 |
| **V₁₂₅ [Vol.-%]** | 6,48 |
| **V₅₀ [Vol.-%]** | 4,12 |

**Tabelle 8: Eigenschaften der Bindemittelfrischmasse**

| | |
|---|---|
| **Ausbreitmaß [cm]** | 27 |

Die Rohstoffe der Bindemittelmischung wurden in einem Mischer der Firma Eirich vom Maschinen-Typ BV 27 gemischt.

Der Mischbehälter und das Rührwerk (2000 U/min) bewegten sich in gegenläufiger Richtung. Die Mischzeit betrug 5 Minuten. Die fertige Bindemittelmischung wurde als Sackware abgefüllt.

Zur Bestimmung der rheologischen Eigenschaften der Bindemittelmischung wurde diese mit dem Anmachwasser im Verhältnis von 1 zu 1 gemischt und das Ausbreitmaß entsprechend geprüft.

### 4. Herstellung und Eigenschaften der Dämmstoffschüttungen

**Tabelle 9: Zusammensetzung der Dämmstoffschüttungen**

| **Rohstoff** | **DS 1** | **DS 2** | **DS 3** | **DS 4** |
|---|---|---|---|---|
| **PG 1 (Feuchte 105 °C 2,92 M.-%)** | 84 kg (200 l) | | | |
| **PG 2 (Feuchte 105 °C 8,87 M.-%)** | | 87 kg (200 l) | | |
| **PG 3 (Feuchte 105 °C 6,04 M.-%)** | | | 76 kg (200 l) | |
| **PG 4 (Feuchte 105 °C 6,89 M.-%)** | | | | 64 kg (200 l) |
| **Bindemittelmischung** | 20 kg | 20 kg | 20 kg | 20 kg |
| **Wasser** | 40 l | 20 l | 20 l | 24 l |
| **w/f-Wert** | 0,38 | 0,19 | 0,21 | 0,29 |
| **Bindemittelmischung [M.-%]** | 19,7 | 20,0 | 21,8 | 25,0 |

Es wurden insgesamt vier Dämmstoffschüttungen (DS1-DS4) hergestellt, die jeweils eines der hydrophobierten Porenbetongranulate (PG1-PG4) enthielten.

Die Dämmstoffschüttung wurde mit einem Estrichboy der Firma Putzmeister angemischt. Hierzu wurden 150 Liter hydrophobiertes Porenbetongranulat mit 20 kg der Bindemittelmischung im Estrichboy für 30 Sekunden trocken vorgemischt. Anschließend wurde das Anmachwasser zugegeben und für weitere 60 Sekunden gemischt. Am Ende werden für weitere 30 Sekunden die restlichen 50 Liter hydrophobiertes Porenbetongranulat untergemischt. Die gebundene Schüttung wurde über einen Druckschlauch mit einem Innendurchmesser von 60 mm und einem Förderdruck von 2 bar auf die zu überdeckende Fläche eingebracht. Mit Hilfe von Richtscheid und Glättkelle wurde eine glatte Oberfläche in der gewünschten Höhe von 100 mm erzielt. Nach 28 Tagen wurden die Materialprüfungen durchgeführt. Für diese Materialprüfungen wurden ebenfalls aus dieser Masse je nach Norm Prüfkörper unterschiedlicher Geometrie wie oben angegeben mit Hilfe von Formen hergestellt.

**Tabelle 10: Eigenschaften der ausgehärteten Dämmstoffschüttungen**

| | DS 1 | DS 2 | DS 3 | DS 4 |
|---|---|---|---|---|
| **Druckfestigkeit gemäß DIN EN 772-1:2016-05 [N/mm²]** | 0,400 | 0,440 | 0,570 | 0,270 |
| **Wärmeleitfähigkeit λ_{10,trocken} gemäß DIN EN 1745:2020 [W/m·K]** | 0,1136 | 0,1116 | 0,0925 | 0,0904 |
| **Trockenrohdichte gemäß DIN EN 772-13:2000-09 [kg/m³]** | 582 | 612 | 456 | 426 |
| **Feuchte nach 14 Tagen (105 °C) [M.-%]** | 26,89 | 15,62 | 14,88 | 12,76 |
| **Feuchte nach 28 Tagen (105 °C) [M.-%]** | 19,56 | 13,81 | 12,15 | 10,42 |

## Patentansprüche

1. Trockene Bindemittelmischung für eine gebundene, schüttfähige, trockene Dämmstoffschüttung aufweisend
a) eine Bindemittelkomponente mit zumindest einem mineralischen, bevorzugt hydraulischen, Bindemittel in einer Menge von 72 bis 94,9 M.-%, bevorzugt 82,5 bis 92,3 M.-%,
b) eine Aktivatorkomponente aus zumindest einem nicht hydrophobierten, hydrothermal gehärteten Poren- oder Schaumbetongranulat in einer Menge von 5 bis 25 M.-%, bevorzugt 7,5 bis 15 M.-%, wobei die Aktivatorkomponente eine Korngröße ≤ 1750 µm, bevorzugt ≤ 1500 µm, aufweist,
c) eine Verdickerkomponente aus zumindest einem organischen Verdickungsmittel in einer Menge von 0,1 bis 3,0 M.-%, bevorzugt 0,2 bis 2,5 M.-%,
wobei die Bindemittelmischung zu mindestens 90 M.-%, bevorzugt zu mindestens 95 M.-%, aus der Bindemittelkomponente, der Aktivatorkomponente und der Verdickerkomponente besteht.

2. Bindemittelmischung nach Anspruch 1,
**dadurch gekennzeichnet, dass**
die Aktivatorkomponente
a) einen d₉₀-Wert von 750 bis 1750 µm, bevorzugt von 800 bis 1250 µm, bestimmt mittels Laserlichtbeugung gemäß DIN ISO13320:2022-12, aufweist,
und/oder
b) einen d₅₀-Wert von 450 bis 1550 µm, bevorzugt 475 bis 900 µm, bestimmt mittels Laserlichtbeugung gemäß DIN ISO13320:2022-12, aufweist,
und/oder
c) einen d₁₀-Wert von 100 bis 750 µm, bevorzugt von 150 bis 550 µm, bestimmt mittels Laserlichtbeugung gemäß DIN ISO13320:2022-12, aufweist.

3. Bindemittelmischung nach Anspruch 1 oder 2,
**dadurch gekennzeichnet, dass**
die Bindemittelmischung besteht aus
a) der Bindemittelkomponente,
b) der Aktivatorkomponente,
c) der Verdickerkomponente,
d) gegebenenfalls zumindest einem weiteren organischen Zusatzmittel,
e) gegebenenfalls zumindest einem inerten Zusatzstoff.

4. Bindemittelmischung nach einem der vorhergehenden Ansprüche,
**dadurch gekennzeichnet, dass**
es sich bei dem zumindest einen Verdickungsmittel um Methylcellulose, bevorzugt Methylhydroxyethylcellulose, handelt.

5. Bindemittelmischung nach einem der vorhergehenden Ansprüche,
**dadurch gekennzeichnet, dass**
die Verdickerkomponente
a) eine Korngröße ≤ 250 µm, bestimmt mittels Laserlichtbeugung gemäß DIN ISO13320:2022-12, aufweist,
und/oder
b) einen d₉₀-Wert von 145 bis 200 µm und/oder einen d₅₀-Wert von 55 bis 90 µm und/oder einen d₁₀-Wert von 20 bis 45 µm aufweist, jeweils bestimmt mittels Laserlichtbeugung gemäß DIN ISO13320:2022-12
und/oder
c) eine Viskosität, bestimmt gemäß DIN 53015:2019-06 an einer wässrigen Lösung (20 °C, 20 °dH) mit 1,9 M.-% der Verdickerkomponente, zwischen 15000 und 150000 mPas, vorzugsweise zwischen 50000 und 150000 mPas, bevorzugt zwischen 100000 und 150000 mPas, aufweist.

6. Bindemittelmischung nach einem der vorhergehenden Ansprüche,
**dadurch gekennzeichnet, dass**
das organische Verdickungsmittel
a) nicht anquellverzögert ist,
und/oder
b) auch ein Wasserretentionsmittel ist.

7. Bindemittelmischung nach einem der vorhergehenden Ansprüche,
**dadurch gekennzeichnet, dass**
a) die Bindemittelmischung zumindest ein weiteres organisches Zusatzmittel, vorzugsweise zumindest ein Fließmittel oder zumindest einen Verflüssiger aufweist, bevorzugt in einer Gesamtmenge an Fließmittel und/oder Verflüssiger von 0,25 bis 1,5 M.-%, bevorzugt 0,5 bis 1,0 M.-%,
und/oder
b) die Bindemittelmischung 0,35 bis 5 M.-%, bevorzugt 0,5 bis 4 M.-%, organische Zusatzmittel aufweist.

8. Bindemittelmischung nach einem der vorhergehenden Ansprüche,
**dadurch gekennzeichnet, dass**
das nicht hydrophobierte Poren- oder Schaumbetongranulat ein mechanisch zerkleinertes Granulat ist.

9. Bindemittelmischung nach einem der vorhergehenden Ansprüche,
**dadurch gekennzeichnet, dass**
die Bindemittelmischung in einem, vorzugsweise luft- und feuchtigkeitsdichten, Behältnis, bevorzugt einem Sack oder einem Silo, angeordnet ist.

10. Bindemittelmischung nach einem der vorhergehenden Ansprüche,
**dadurch gekennzeichnet, dass**
a) die Bindemittelkomponente Portlandzementklinker und zumindest einen Erstarrungsregler aufweist, wobei es sich bei dem zumindest einen Erstarrungsregler vorzugsweise um Gips oder Halbhydrat oder Anhydrit handelt, wobei der Anteil an Portlandzementklinker und Erstarrungsregler vorzugsweise 20 bis 90 M.-%, bevorzugt 24 bis 88 M.-%, beträgt
und/oder
b) die Bindemittelkomponente zumindest einen latent hydraulischen Zusatzstoff, bevorzugt Hüttensand, und/oder zumindest einen puzzolanischen Zusatzstoff, bevorzugt Silicastaub und/oder Flugasche und/oder calcinierten Ton, aufweist,
und/oder
c) die Bindemittelmischung 0 bis 15 M.-%, bevorzugt 0 bis 10 M.-%, besonders bevorzugt 0 bis 5 M.-%, inaktiven Zusatzstoff aufweist.

11. Bindemittelmischung nach einem der vorhergehenden Ansprüche,
**dadurch gekennzeichnet, dass**
die Bindemittelmischung einen SR-Zement (sulfate resistent) gemäß DIN EN 197-1 :2011-11 aufweist.

12. Bindemittelfrischmasse,
**dadurch gekennzeichnet, dass**
die Bindemittelfrischmasse Anmachwasser und die Bindemittelmischung gemäß einem der vorhergehenden Ansprüche enthält, wobei die Bindemittelfrischmasse mit einem w/f-Wert von 1 ein Ausbreitmaß von 22 bis 37 cm, bevorzugt 25 bis 35 cm aufweist.

13. Gebundene, schüttfähige, trockene, unverfestigte Dämmstoffschüttung aufweisend
a) eine hydrophobe Dämmstoffkomponente aus zumindest einem hydrophobem Dämmstoffgranulat in einer Menge von 50 bis 90 M.-%, bevorzugt 55 bis 85 M.-%, besonders bevorzugt 65 bis 83 M.-%,
b) die Bindemittelmischung gemäß einem der Ansprüche 1 bis 11 in einer Menge von 10 bis 50 M.-%, bevorzugt 15 bis 45 M.-%, besonders bevorzugt 17 bis 35 M.-%.

14. Dämmstoffschüttung nach Anspruch 13,
**dadurch gekennzeichnet, dass**
die Dämmstoffschüttung ein Dämmstoffgemenge und ein Bindemittelgemenge aufweist, die in voneinander getrennten, insbesondere luft- und feuchtigkeitsdichten, Behältnissen angeordnet bzw. abgepackt sind, wobei das Dämmstoffgemenge die Dämmstoffkomponente aufweist und das Bindemittelgemenge die Bindemittelmischung aufweist, vorzugsweise aus der Bindemittelmischung besteht.

15. Dämmstoffschüttung nach Anspruch 13 oder 14,
**dadurch gekennzeichnet, dass**
es sich bei dem hydrophoben Dämmstoffgranulat um ein hydrophobiertes, mineralisches Dämmstoffgranulat, vorzugsweise hydrophobiertes Poren- oder Schaumbetongranulat oder hydrophobierten Blähperlit oder hydrophobierten Blähvermiculit hydrophobiertes Blähglas oder hydrophobiertes Schaumglas, oder um ein Polystyrolgranulat handelt, wobei vorzugsweise
a) das hydrophobierte mineralische Dämmstoffgranulat aus Granulatkörnern besteht und die Granulatkörner eine oberflächliche Hydrophobierung, vorzugsweise aus Silikonharz, aufweisen, wobei es sich bei dem oberflächlich hydrophobierten mineralischen Dämmstoffgranulat vorzugsweise um mechanisch zerkleinertes Dämmstoffgranulat, bevorzugt mechanisch zerkleinertes Poren- oder Schaumbetongranulat, handelt,
und/oder
b) das hydrophobierte mineralische Dämmstoffgranulat aus mechanisch gebrochenen Granulatkörnern besteht und die Granulatkörner eine Massenhydrophobierung, vorzugsweise aus Silikonharz, aufweisen, wobei es sich bei dem Dämmstoffgranulat vorzugsweise um Poren- oder Schaumbetongranulat, handelt.

16. Dämmstoffschüttung nach einem der Ansprüche 13 bis 15,
**dadurch gekennzeichnet, dass**
die hydrophobe Dämmstoffkomponente
a) mindestens 70 M.-%, bevorzugt mindestens 90 M.-%, besonders bevorzugt mindestens 95 M.-%, ganz besonders bevorzugt 100 M.-%, hydrophobiertes Poren- und/oder Schaumbetongranulat aufweist,
und/oder
b) eine Korngröße ≤ 10 mm, vorzugsweise ≤ 8 mm, bevorzugt ≤ 6 mm, aufweist,
und/oder
c) einen Siebdurchgang bei 8 mm von 100 M.-% und/oder bei 5 mm von 80 bis 100 M.-% und/oder bei 4 mm zwischen 60 und 80 M.-% und/oder bei 2 mm von 20 bis 50 M.-%, besonders bevorzugt von 25 bis 45 M.-%, und/oder bei 1 mm von 5 bis 15 M.-%, aufweist,
und/oder
d) eine Schüttdichte von 250 bis 550 kg/m³, vorzugsweise 280 bis 530 kg/m³, bevorzugt 300 bis 500 kg/m³, bestimmt gemäß DIN EN 1097-3:1998-06 aufweist,
und/oder
e) eine Wasseraufnahme von 2 bis 16 M.-%, bevorzugt 4 bis 12 M.-%, besonders bevorzugt 6 bis 10 M.-%, bestimmt mittels Westinghouse-Methode nach DIN 15366, aufweist.

17. Dämmstoffschüttung nach einem der Ansprüche 13 bis 16,
**dadurch gekennzeichnet, dass**
die Dämmstoffschüttung zu mindestens 90 M.-%, bevorzugt zu mindestens 95 M.-%, besonders bevorzugt zu mindestens 97 M.-%, aus der hydrophoben Dämmstoffkomponente und der Bindemittelmischung besteht.

18. Verfahren zur Herstellung einer verfestigten gebundenen, formstabilen Dämmstoffschüttung, insbesondere in Form einer formstabilen Dämmstoffschüttungsschicht,
**gekennzeichnet durch**
folgende Verfahrensschritte:
a) Herstellung einer Schüttungsfrischmasse aufweisend die Bestandteile der Dämmstoffschüttung gemäß einem der Ansprüche 13 bis 17 und Anmachwasser, wobei die Schüttungsfrischmasse vorzugsweise einen w/f-Wert von 0,15 bis 0,50, bevorzugt 0,17 bis 0,46 aufweist,
b) Einbringen der Schüttungsfrischmasse auf einen Untergrund,
c) Erhärten lassen der Schüttungsfrischmasse.

19. Verfestigte Dämmstoffschüttung, hergestellt nach dem Verfahren nach Anspruch 18 aus einer Schüttungsfrischmasse mit einem w/b-Wert von 1,0 ,
**dadurch gekennzeichnet, dass**
die Dämmstoffschüttung
a) eine Trockenrohdichte nach 28 Tagen gemäß DIN EN 772-13:2000-09 von 400 bis 700 kg/m³, bevorzugt 450 bis 650 kg/m³, aufweist,
und/oder
b) eine Druckfestigkeit nach 28 Tagen gemäß DIN EN 772-1:2016-05 von 0,200 bis 0,900 N/mm², bevorzugt 0,350 bis 0,750 N/mm², aufweist,
und/oder
c) eine maximale Feuchte von 20 M.-%, bevorzugt 16 M.-%, besonders bevorzugt von 12 M.-%, nach 14 Tagen Alterung aufweist,
und/oder
d) eine Wärmeleitfähigkeit *λ*_{10,trocken} nach 28 Tagen gemäß DIN EN 1745:2020 von 0,08 bis 0,16 W/m·K, bevorzugt 0,09 bis 0,13 W/m·K, aufweist.

20. Verwendung einer Dämmstoffschüttung gemäß einem der Ansprüche 13 bis 17 zur Herstellung einer verfestigten gebundenen, formstabilen Dämmstoffschüttung, bevorzugt einer Dämmstoffschüttungsschicht eines Fußbodenaufbaus oder eines Dachaufbaus oder einer Ausgleichsschüttungsschicht einer Installationsebene.

## Claims

1. A dry binder mixture for a bonded, free-flowing, dry loose-fill insulation comprising
a) a binder component with at least one mineral, preferably hydraulic, binder in an amount of 72 to 94.9 mass-%, preferably 82.5 to 92.3 mass-%,
b) an activator component of at least one non-hydrophobized, hydrothermally hardened aerated or foamed concrete granulate in an amount of 5 to 25 mass-%, preferably 7.5 to 15 mass-%, wherein the activator component comprises a grain size ≤ 1750 µm, preferably ≤ 1500 µm,
c) a thickener component of at least one organic thickening agent in an amount of 0.1 to 3.0 mass-%, preferably 0.2 to 2.5 mass-%,
wherein the binder mixture consists of at least 90 mass-%, preferably at least 95 mass-%, of the binder component, the activator component, and the thickener component.

2. The binder mixture according to claim 1,
**characterized in that**
the activator component
a) comprises a d₉₀ value of 750 to 1750 µm, preferably 800 to 1250 µm, determined by laser light diffraction in accordance with DIN ISO 13320:2022-12,
and/or
b) comprises a d₅₀ value of 450 to 1550 µm, preferably 475 to 900 µm, determined by laser light diffraction in accordance with DIN ISO 13320:2022-12,
and/or
c) comprises a d₁₀ value of 100 to 750 µm, preferably 150 to 550 µm, determined by laser light diffraction in accordance with DIN ISO 13320:2022-12.

3. The binder mixture according to claim 1 or 2,
**characterized in that**
the binder mixture consists of
a) the binder component,
b) the activator component,
c) the thickener component,
d) if applicable at least one additional organic admixture,
e) if applicable at least one inert additive.

4. The binder mixture according to one of the preceding claims,
**characterized in that**
the at least one thickening agent is methylcellulose, preferably methylhydroxyethylcellulose.

5. The binder mixture according to one of the preceding claims,
**characterized in that**
the thickening component
a) comprises a grain size ≤ 250 µm, determined by laser light diffraction in accordance with DIN ISO 13320:2022-12,
and/or
b) comprises a d₉₀ value of 145 to 200 µm and/or a d₅₀ value of 55 to 90 µm and/or a d₁₀ value of 20 to 45 µm, each determined by laser light diffraction in accordance with DIN ISO 13320:2022-12
and/or
c) comprises a viscosity, determined in accordance with DIN 53015:2019-06 in an aqueous solution (20 °C, 20 °dH) containing 1.9 mass-% of the thickening component, ranging from 15,000 to 150,000 mPas, preferably from 50,000 to 150,000 mPas, and most preferably from 100,000 to 150,000 mPas.

6. The binder mixture according to one of the preceding claims,
**characterized in that**
the organic thickening agent
a) is not swelling-retarded,
and/or
b) is also a water-retention agent.

7. The binder mixture according to one of the preceding claims,
**characterized in that**
a) the binder mixture comprises at least one additional organic admixture, preferably at least one plasticizer or at least one liquefier, preferably in a total amount of plasticizer and/or liquefier of 0.25 to 1.5 mass-%, preferably 0.5 to 1.0 mass-%,
and/or
b) the binder mixture comprises 0.35 to 5 mass-%, preferably 0.5 to 4 mass-%, organic admixtures.

8. The binder mixture according to one of the preceding claims,
**characterized in that**
the non-hydrophobized aerated or foamed concrete granulate is a mechanically comminuted granulate.

9. The binder mixture according to one of the preceding claims,
**characterized in that**
the binder mixture is arranged in a, preferably airtight and moisture-tight, container, preferably in a bag or a silo.

10. The binder mixture according to one of the preceding claims,
**characterized in that**
a) the binder component comprises Portland cement clinker and at least one setting regulator, wherein the at least one setting regulator preferably is gypsum or hemihydrate or anhydrite, wherein the amount of Portland cement clinker and setting regulator preferably is 20 to 90 mass-%, more preferably 24 to 88 mass-%,
and/or
b) the binder component comprises at least one latent hydraulic additive, preferably ground granulated blast furnace slag, and/or at least one pozzolanic additive, preferably silica fume and/or fly ash and/or calcined clay,
and/or
c) the binder mixture comprises 0 to 15 mass-%, preferably 0 to 10 mass-%, more preferably 0 to 5 mass-%, of inactive additive.

11. The binder mixture according to one of the preceding claims,
**characterized in that**
the binder mixture comprises an SR (sulfate-resistant) cement in accordance with DIN EN 197-1:2011-11.

12. Fresh binder mass,
**characterized in that**
the fresh binder mass contains mixing water and the binder mixture according to one of the preceding claims, wherein the fresh binder mass, with a w/s ratio of 1, comprises a slump of 22 to 37 cm, preferably 25 to 35 cm.

13. A bonded, free-flowing, dry, unconsolidated loose-fill insulation comprising
a) a hydrophobic insulation material component of at least one hydrophobic insulation material granulate in an amount of 50 to 90 mass-%, preferably 55 to 85 mass-%, most preferably 65 to 83 mass- %,
b) the binder mixture according to one of claims 1 through 11 in an amount of 10 to 50 mass-%, preferably 15 to 45 mass-%, most preferably 17 to 35 mass-%.

14. The loose-fill insulation according to claim 13,
**characterized in that**
the loose-fill insulation comprises an insulation material batch and a binder batch, which are arranged or packaged in separate, in particular airtight and moisture-tight, containers, wherein the insulation material batch comprises the insulation material component and the binder batch comprises the binder mixture, preferably consists of the binder mixture.

15. The loose-fill insulation according to claim 13 or 14,
**characterized in that**
the hydrophobic insulation material granulate is a hydrophobized mineral insulation material granulate, preferably hydrophobized aerated or foamed concrete granulate or hydrophobized expanded perlite or hydrophobized expanded vermiculite or hydrophobized expanded glass or hydrophobized foam glass or a polystyrene granulate, wherein preferably
a) the hydrophobized mineral insulation material granulate consist of granulate grains, and the granulate grains comprise a surface hydrophobization, preferably made of silicone resin, wherein the surface-hydrophobized mineral insulation material granulate preferably is a mechanically comminuted insulation material granulate, preferably a mechanically comminuted aerated or foamed concrete granulate,
and/or
b) the hydrophobized mineral insulation material granulate consist of mechanically comminuted granulate grains, and the granulate grains comprise a bulk hydrophobization, preferably made of silicone resin, wherein the insulation material granulate preferably is aerated or foamed concrete granulate.

16. The loose-fill insulation according to one of claims 13 to 15,
**characterized in that**
the hydrophobic insulation material component
a) comprises at least 70 mass-%, preferably at least 90 mass-%, more preferably at least 95 mass-%, and most preferably 100 mass-%, of hydrophobized aerated and/or foamed concrete granulate,
and/or
b) comprises a grain size ≤ 10 mm, preferably ≤ 8 mm, and most preferably ≤ 6 mm,
and/or
c) a sieve passage of 100 mass-% at 8 mm and/or of 80 to 100 mass-% at 5 mm and/or between 60 and 80 mass-% at 4 mm and/or of 20 to 50 mass-%, particularly preferably of 25 to 45 mass-%, at 2 mm, and/or a of 5 to 15 mass-% at 1 mm,
and/or
d) comprises a bulk density of 250 to 550 kg/m³, preferably 280 to 530 kg/m³, and most preferably 300 to 500 kg/m³, determined in accordance with DIN EN 1097-3:1998-06,
and/or
e) comprises a water absorption of 2 to 16 mass-%, preferably 4 to 12 mass-%, more preferably 6 to 10 mass-%, determined using the Westinghouse method in accordance with DIN 15366.

17. The loose-fill insulation according to one of claims 13 to 16,
**characterized in that**
the loose-fill insulation consists of at least 90 mass-%, preferably of at least 95 mass-%, and more preferably of at least 97 mass-%, of the hydrophobic insulation material component and the binder mixture.

18. A method for producing a consolidated, bonded, dimensionally stable loose-fill insulation, in particular in the form of a dimensionally stable loose-fill insulation layer,
**characterized by**
the following process steps:
a) preparing a fresh loose-fill mixture comprising the components of the loose-fill insulation according to one of claims 13 to 17 and mixing water, wherein the fresh loose-fill mixture preferably comprises a w/s ratio of 0.15 to 0.50, preferably 0.17 to 0.46,
b) placing the fresh loose-fill mixture onto an underground,
c) Allowing the fresh loose-fill mixture to harden.

19. Consolidated loose-fill insulation, produced according to the method according to claim 18 from a fresh loose-fill mixture with a w/b ratio of 1.0,
**characterized in that**
the loose-fill insulation
a) comprises a dry bulk density after 28 days, in accordance with DIN EN 772-13:2000-09, of 400 to 700 kg/m³, preferably 450 to 650 kg/m³,
and/or
b) comprises a compressive strength after 28 days in accordance with DIN EN 772-1:2016-05 of 0.200 to 0.900 N/mm², preferably 0.350 to 0.750 N/mm²,
and/or
c) comprises a maximum moisture content of 20 mass-%, preferably 16 mass-%, more preferably 12 mass-%, after 14 days of aging,
and/or
d) comprises a thermal conductivity *λ*_{10,dry} of 0.08 to 0.16 W/m·K, preferably 0.09 to 0.13 W/m·K, after 28 days in accordance with DIN EN 1745:2020.

20. Use of a loose-fill insulation according to one of claims 13 to 17 for the production of a consolidated, bonded, dimensionally stable loose-fill insulation, preferably an loose-fill insulation layer of a floor structure or a roof structure, or a leveling fill layer of an installation level.

## Revendications

1. Mélange de liant sec pour un remblai isolant sec, lié et déversable comprenant
a) un composant liant comprenant au moins un liant minéral, de préférence hydraulique, en une quantité comprise entre 72 et 94,9 % en masse, de préférence entre 82,5 et 92,3 % en masse,
b) un composant activateur constitué d'au moins un granulat de béton cellulaire ou moussé non hydrophobisé et durci par voie hydrothermale, en une quantité comprise entre 5 et 25 % en masse, de préférence entre 7,5 et 15 % en masse, le composant activateur comprenant une taille des grains ≤ 1 750 µm, de préférence ≤ 1 500 µm,
c) un composant épaississant constitué d'au moins un agent épaississant organique en une quantité comprise entre 0,1 et 3,0 % en masse, de préférence entre 0,2 et 2,5 % en masse,
où le mélange de liant est constitué d'au moins 90 % en masse, de préférence d'au moins 95 % en masse, du composant liant, du composant activateur et du composant épaississant.

2. Mélange de liant selon la revendication 1,
**caractérisé en ce que**
le composant activateur
a) comprend une valeur d₉₀ entre 750 et 1 750 µm, de préférence entre 800 et 1 250 µm, déterminée par diffraction de la lumière laser conformément à la norme DIN ISO 13320:2022-12,
et/ou
b) comprend une valeur d₅₀ entre 450 et 1 550 µm, de préférence entre 475 et 900 µm, déterminée par diffraction de lumière laser conformément à la norme DIN ISO 13320:2022-12,
et/ou
c) comprend une valeur d₁₀ entre 100 et 750 µm, de préférence entre 150 et 550 µm, déterminée par diffraction de la lumière laser conformément à la norme DIN ISO 13320:2022-12.

3. Mélange de liant selon la revendication 1 ou 2,
**caractérisé en ce que**
le mélange de liant est constitué
a) du composant liant,
b) du composant activateur,
c) du composant épaississant,
d) le cas échéant, d'au moins un autre adjuvant organique,
e) le cas échéant, d'au moins un additif inerte.

4. Mélange de liant selon l'une des revendications précédentes,
**caractérisé en ce que**
ledit au moins un agent épaississant est de la méthylcellulose, de préférence de la méthylhydroxyéthylcellulose.

5. Mélange de liant selon l'une des revendications précédentes,
**caractérisé en ce que**
le composant épaississant
a) comprend une taille de grains ≤ 250 µm, déterminée par diffraction de la lumière laser conformément à la norme DIN ISO 13320:2022-12,
et/ou
b) comprend une valeur d₉₀ entre 145 et 200 µm et/ou une valeur d₅₀ entre 55 et 90 µm et/ou une valeur d₁₀ entre 20 et 45 µm, déterminées dans chaque cas par diffraction laser conformément à la norme DIN ISO 13320:2022-12
et/ou
c) une viscosité, déterminée conformément à la norme DIN 53015:2019-06 sur une solution aqueuse (20 °C, 20 °dH) avec 1,9 % en masse du composant épaississant, entre 15 000 et 150 000 mPas, de préférence entre 50 000 et 150 000 mPas, et de manière particulièrement préférée entre 100 000 et 150 000 mPas.

6. Mélange de liant selon l'une des revendications précédentes,
**caractérisé en ce que**
l'agent épaississant organique
a) n'est pas à gonflement retardé,
et/ou
b) est également un rétenteur d'eau.

7. Mélange de liant selon l'une des revendications précédentes,
**caractérisé en ce que**
a) le mélange de liant comprend au moins un autre adjuvant organique, de préférence au moins un plastifiant ou au moins un superplastifiant, de préférence en une quantité totale de plastifiant et/ou de superplastifiant entre 0,25 et 1,5 % en masse, de préférence entre 0,5 et 1,0 % en masse,
et/ou
b) le mélange de liant comprend de 0,35 à 5 % en masse, de préférence de 0,5 à 4 % en masse, d'adjuvants organiques.

8. Mélange de liant selon l'une des revendications précédentes,
**caractérisé en ce que**
le granulat de béton cellulaire ou moussé non hydrophobisé est un granulat broyé mécaniquement.

9. Mélange de liant selon l'une des revendications précédentes,
**caractérisé en ce que**
le mélange de liant est placé dans un récipient, de préférence étanche à l'air et à l'humidité, de préférence dans un sac ou un silo.

10. Mélange de liant selon l'une des revendications précédentes,
**caractérisé en ce que**
a) le composant liant comprend du clinker de ciment Portland et au moins un régulateur de prise, où ledit au moins un régulateur de prise est de préférence du gypse, du hemihydrate ou de l'anhydrite, où la proportion de clinker de ciment Portland et de régulateur de prise est de préférence comprise entre 20 et 90 % en masse, de préférence entre 24 et 88 % en masse,
et/ou
b) le composant liant comprend au moins un additif à hydraulicité latente, de préférence du laitier de haut fourneau, et/ou au moins un additif pouzzolanique, de préférence de la fumée de silice et/ou des cendres volantes et/ou de l'argile calcinée,
et/ou
c) le mélange de liant comprend de 0 à 15 % en masse, de préférence de 0 à 10 % en masse, de manière particulièrement préférée de 0 à 5 % en masse, d'additif inactif.

11. Mélange de liant selon l'une des revendications précédentes,
**caractérisé en ce que**
le mélange de liant comprend un ciment SR (résistant aux sulfates) conforme à la norme DIN EN 197-1:2011-11.

12. Masse fraîche de liant,
**caractérisée en ce que**
la masse fraîche de liant comprend de l'eau de gâchage et le mélange de liant selon l'une des revendications précédentes, où la masse fraîche de liant comprend, avec un rapport eau/solide (e/s) de 1, un étalement de 22 à 37 cm, de préférence de 25 à 35 cm.

13. Remblai isolant lié, déversable, sec et non consolidé, comprenant
a) un composant hydrophobe de matériau isolant constitué d'au moins un granulat de matériau isolant hydrophobe en une quantité comprise entre 50 et 90 % en masse, de préférence entre 55 et 85 % en masse, et de manière particulièrement préférée entre 65 et 83 % en masse,
b) le mélange de liant selon l'une des revendications 1 à 11, en une quantité comprise entre 10 et 50 % en masse, de préférence entre 15 et 45 % en masse, et de manière particulièrement préférée entre 17 et 35 % en masse.

14. Remblai isolant selon la revendication 13,
**caractérisé en ce que**
le remblai isolant comprend une composition de matériau isolant et une composition de liant, qui sont disposées ou conditionnées dans des récipients séparés les uns des autres, en particulier étanches à l'air et à l'humidité, où la composition de matériau isolant comprend le composant de matériau isolant et la composition de liant comprend le mélange de liant, de préférence la composition de liant est constitué du mélange de liant.

15. Remblai isolant selon la revendication 13 ou 14,
**caractérisé en ce que**
le granulat de matériau isolant est un granulat de matériau isolant minéral hydrophobisé, de préférence un granulat de béton cellulaire ou moussé hydrophobisé, ou de la perlite expansée hydrophobisée, ou de la vermiculite expansée hydrophobisée, ou du verre expansé hydrophobisé, ou du verre cellulaire hydrophobisé, ou un granulat de polystyrène, où, de préférence,
a) le granulat de matériau isolant minéral hydrophobisé est constitué de grains de granulat et les grains de granulat comprennent une hydrophobisation superficielle, de préférence de résine de silicone, où le granulat de matériau isolant minéral hydrophobisé superficiellement est de préférence un granulat de matériau isolant broyé mécaniquement, de préférence un granulat de béton cellulaire ou moussé broyé mécaniquement,
et/ou
b) le granulat de matériau isolant minéral hydrophobisé est constitué de grains de granulat concassés mécaniquement et les grains de granulat comprennent une hydrophobisation en masse, de préférence de résine de silicone, où le granulat de matériau isolant est de préférence un granulat de béton cellulaire ou moussé.

16. Remblai isolant selon l'une des revendications 13 à 15,
**caractérisé en ce que**
le composant hydrophobe de matériau isolant
a) comprend au moins 70 % en masse, de préférence au moins 90 % en masse, de manière particulièrement préférée au moins 95 % en masse, et de manière tout à fait particulièrement préférée 100 % en masse, de granulat de béton cellulaire et/ou de béton moussé hydrophobisé,
et/ou
b) comprend une taille de grains ≤ 10 mm, de préférence ≤ 8 mm, de manière particulièrement préférée ≤ 6 mm,
et/ou
c) un passage au tamis de 100 % en masse à 8 mm et/ou de 80 à 100 % en masse à 5 mm et/ou entre 60 et 80 % en masse à 4 mm et/ou de 20 à 50 % en masse, de préférence de 25 à 45 % en masse, à 2 mm et/ou de 5 à 15 % en masse à 1 mm,
et/ou
d) une densité apparente entre 250 et 550 kg/m³, de préférence entre 280 et 530 kg/m³, de manière particulièrement préférée entre 300 et 500 kg/m³, déterminée selon la norme DIN EN 1097-3:1998-06,
et/ou
e) une absorption d'eau entre 2 et 16 % en masse, de préférence entre 4 et 12 % en masse, et de manière particulièrement préférée entre 6 et 10 % en masse, déterminée selon la méthode Westinghouse conformément à la norme DIN 15366.

17. Remblai isolant selon l'une des revendications 13 à 16,
**caractérisé en ce que**
le remblai isolant est constitué d'au moins 90 % en masse, de préférence d'au moins 95 % en masse, et de manière particulièrement préférée d'au moins 97 % en masse, du composant hydrophobe de matériau isolant et du mélange de liant.

18. Procédé de fabrication d'un remblai isolant consolidé, lié et indéformable, en particulier sous la forme d'une couche de remblai isolant indéformable,
**caractérisé par**
les étapes suivantes:
a) la préparation d'une masse fraîche de remblai comprenant les constituants du remblai isolant selon l'une des revendications 13 à 17 et de l'eau de gâchage, où la masse fraîche de remblai comprend de préférence un rapport eau/solide (e/s) entre 0,15 et 0,50, de manière particulièrement préférée entre 0,17 et 0,46,
b) mise en place de la masse fraîche de remblai sur un support,
c) Laisser durcir la masse fraîche de remblai.

19. Remblai isolant consolidé, fabriqué selon le procédé selon la revendication 18 à partir d'une masse fraîche de remblai avec un rapport eau/liant (e/l) de 1,0,
**caractérisé en ce que**
le remblai isolant
a) comprend une masse volumique apparente sèche après 28 jours, conformément à la norme DIN EN 772-13:2000-09, entre 400 et 700 kg/m³, de préférence entre 450 et 650 kg/m³,
et/ou
b) comprend une résistance à la compression après 28 jours, conformément à la norme DIN EN 772-1:2016-05, entre 0,200 et 0,900 N/mm², de préférence entre 0,350 et 0,750 N/mm²,
et/ou
c) comprend une humidité maximale de 20 % en masse, de préférence de 16 % en masse, de manière particulièrement préférée de 12 % en masse, après 14 jours de vieillissement,
et/ou
d) comprend une conductivité thermique λ_{10,sec} après 28 jours, conformément à la norme DIN EN 1745:2020, entre 0,08 et 0,16 W/m·K, de préférence entre 0,09 et 0,13 W/m·K.

20. Utilisation d'un remblai isolant selon l'une des revendications 13 à 17 pour la fabrication d'un remblai isolant consolidé, lié et indéformable, de préférence d'une couche de remblai isolant d'une structure de plancher ou d'une structure de toiture, ou d'une couche de remblai de nivellement d'un plan d'installation.
